# EUROPÄISCHE PATENTANMELDUNG

(11) **EP 2 025 815 A2**
(43) Veröffentlichungstag der Anmeldung: **18.02.2009**
(21) Anmeldenummer: 08405138.2
(22) Anmeldetag: 19.05.2008
(51) Int. Cl.: E01F 9/012

(54) **Stativ für ein Faltsignal**

(30) Priorität: 13.08.2007 CH 12772007
(71) Anmelder: Triopan Dähler AG, 9401 Rorschach (CH)
(72) Erfinder: Kleger, Alexander, 9401 Rohrschach (CH)
(74) Vertreter: Gachnang, Hans Rudolf

(57) **Zusammenfassung**

Das Stativ (3) für ein Faltsignal umfasst zum Spannen des Faltsignals drei gelenkig miteinander verbundene Arme (11). Die Standfläche bilden drei Spreizstangen (13), welche an den unteren Enden der Arme (11) angelenkt sind.

## Beschreibung

Gegenstand der Erfindung ist ein Stativ für ein Faltsignal gemäss Oberbegriff des Patentanspruchs 1.

Faltsignale werden als Hinweis auf Gefahren auf Strassen und zur Verkehrslenkung bei Unfällen und Bauarbeiten eingesetzt.

Bekannte Faltsignale weisen ein als Dreibein ausgebildetes Stativ auf, bei dem die oberen Enden der drei Arme oder Beine gelenkig miteinander verbunden sind und, wenn die drei Beine gespreizt werden, wird ein darüber gestülptes, aus drei Dreiecken bestehendes Faltsignal geöffnet und ist für die Verkehrsteilnehmer gut ersichtlich. Das untere Ende der Beine steht auf dem Boden. Ein solches Faltsignal ist beispielsweise aus der DE 295 01 530 U1 bekannt.

In der EP 1 770 217 wird ein Stativ für ein Faltsignal beschrieben, das einhändig geöffnet werden kann. Dazu sind die drei das Dreibein bildenden Arme an ihrem oberen Ende mit einer Schiebestange verbunden, auf der eine Feder und eine Schiebehülse mit daran befestigten Spreizstangen angeordnet sind, die die Arme in Spreizstellung bringen und dort festhält. Das Öffnen eines solchen Faltsignals ist dadurch sehr einfach. Nachteilig an beiden bekannten Faltsignalen ist die geringe Standfläche, gebildet durch die Enden der drei Arme, auf denen das Faltsignal steht und die gleichzeitig das Faltsignal in Betriebsstellung gespannt halten. Bereits Luftströmungen, welche durch vorbeifahrende Fahrzeuge erzeugt werden, können das Faltsignal zum Kippen bringen oder zumindest zur Seite gleiten lassen.

Eine Aufgabe der vorliegenden Erfindung besteht nun darin, ein Stativ für ein Faltsignal zu schaffen, welches die vorteilhaften Eigenschaften eines einfachen Öffnungsvorgangs aufweist und zudem bei ähnlich kleinem Packmass eine höhere Standfestigkeit gewährleistet.

Gelöst wird diese Aufgabe durch ein Stativ gemäss den Merkmalen des Patentanspruchs 1.
Vorteilhafte Ausgestaltungen des Stativs sind in den abhängigen Ansprüchen umschrieben.

Es gelingt mit der Verwendung der Spreizstangen als Standbeine anstelle der das Faltsignal spreizenden Arme, eine wesentlich bessere Standfestigkeit zu erlangen. Dies kann mit der gleichen Anzahl von Einzelteilen wie beim herkömmlichen Stativ gemäss EP 1170217 erfolgen, so dass sich keine höheren Kosten ergeben und auch die gewohnte Handhabung nicht geändert werden muss.

Anhand dreier illustrierter Ausführungsbeispiele wird die Erfindung näher erläutert. Es zeigen
- Figur 1: eine Seitenansicht eines Faltsignals mit einem erfindungsgemässen Stativ,
- Figur 2: eine Aufsicht auf das Faltsignal in Figur 1,
- Figur 3: eine erste Ausgestaltung des erfindungsgemässen Stativs (ohne Faltsignal),
- Figur 4: das in Figur 3 dargestellte Stativ zusammengeklappt (ohne Faltsignal),
- Figur 5: eine zweite Ausgestaltung des Stativs mit einem Hilfsgestänge zwischen den Armen und den Schiebestangen und
- Figur 6: eine dritte Ausgestaltung der Erfindung mit einem Hilfsgestänge unterhalb der Schiebestange.

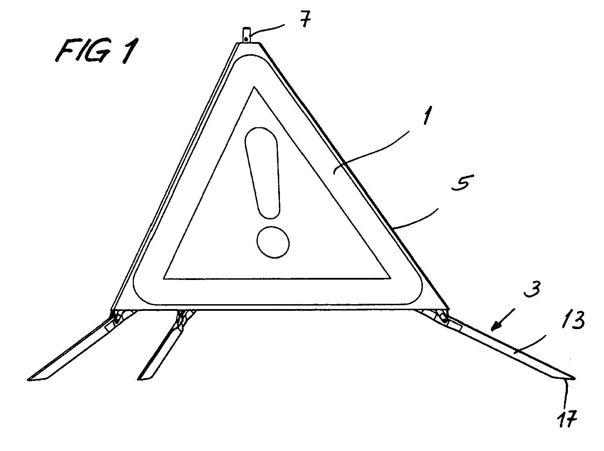

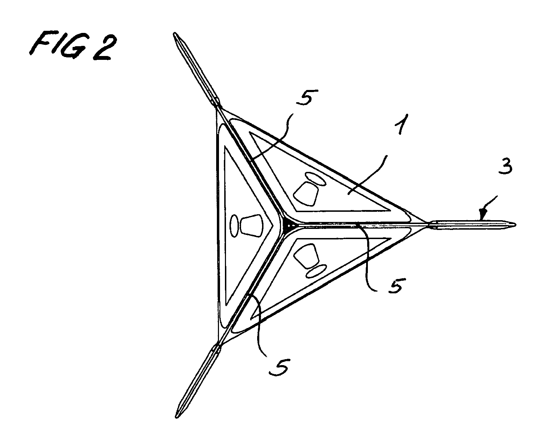

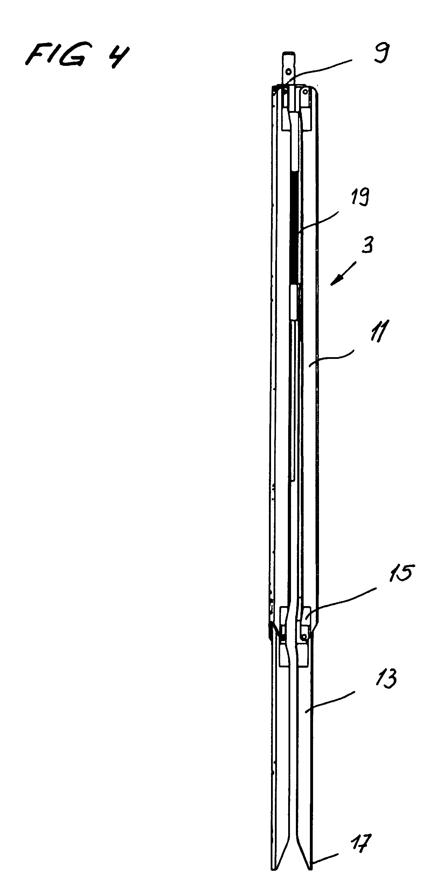

Das in Figur 1 dargestellte Faltsignal 1 umfasst drei Dreiecksflächen, die jeweils an den beiden oben liegenden Kanten 5 zu einer Pyramide miteinander verbunden sind. Das Material der Faltsignale ist meist eine schlaffe bedruckte Kunststofffolie. Um dieses schlaffe Gebilde als Pyramide aufstellen zu können, ist das Faltsignal 1 auf einem Stativ 3 aufgesteckt. Vom Stativ 3 überragt meist das obere Ende einer Schiebestange 7 das Faltsignal 1. An der Schiebestange 7 kann oben ein Ring zum Tragen des Faltsignals 1 befestigt sein oder es kann auf das Schiebestangenende eine Lampe aufgesetzt werden (Lampe und Ring nicht dargestellt) (Figuren 1 und 2).

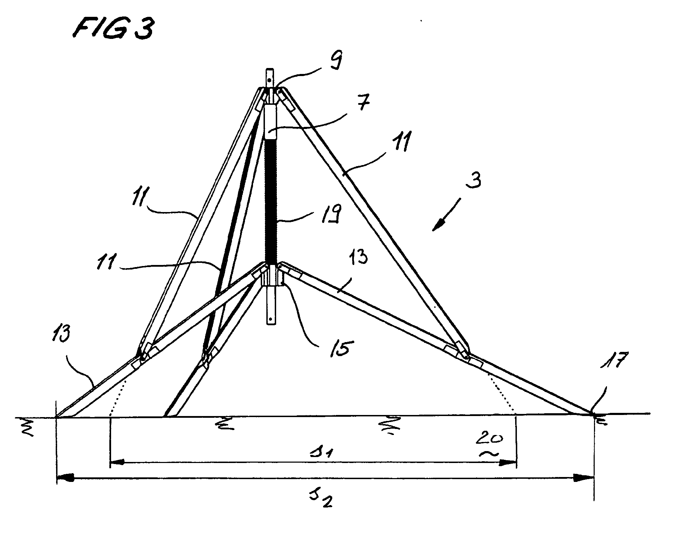

In Figur 3 ist eine erste Ausgestaltung des erfindungsgemässen Stativs 3 in einer Seitenansicht ohne Faltsignal 1 dargestellt. An einem Gelenkteil 9, welches fest mit der Schiebestange 7 verbunden ist, sind drei Arme 11 an ihren oberen Enden angelenkt. Die unteren Enden der Arme 11 sind gelenkig mit Spreizstangen 13 verbunden. Die drei Spreizstangen 13 treffen sich an einer auf der Schiebestange 7 verschiebbaren Schiebehülse 15 und sind mit letzterer gelenkig verbunden.
Im Gegensatz zu den bekannten Stativen, bei denen die unteren Enden der Spreizstangen 13 zwischen den beiden Enden der Arme 11 mit diesen verbunden sind, sind in der erfindungsgemässen Ausgestaltung des Stativs 3 die Spreizstangen 13 wesentlich länger ausgebildet und deren Enden 17 gelangen in Anlage mit dem Boden 20 als Aufstellfläche.
Durch die Verwendung der Spreizstangen 13 als Standfüsse anstelle der Arme 11 vergrössert sich die Auflagedistanz s₂ wesentlich gegenüber der Auflagedistanz bei herkömmlichen Stativen, bei denen die Arme auf der Standfläche aufliegen (Distanz s₁). Die drei Flächen des Faltsignals 1 bleiben unverändert.
Nachteile bezüglich des Packmasses des erfindungsgemässen Stativs 3 ergeben sich nicht, wie aus Figur 4 ersichtlich. Auch besteht dieses Stativ 3 aus gleich vielen Einzelteilen. Durch eine Feder 19 wird, wie bei den bisher bekannten Stativen, das Spreizen der Arme 11 und hier zusätzlich der Spreizstangen 13 begünstigt. Zudem hält die Feder 19 das Faltsignal 1 in Arbeitsstellung gespannt.

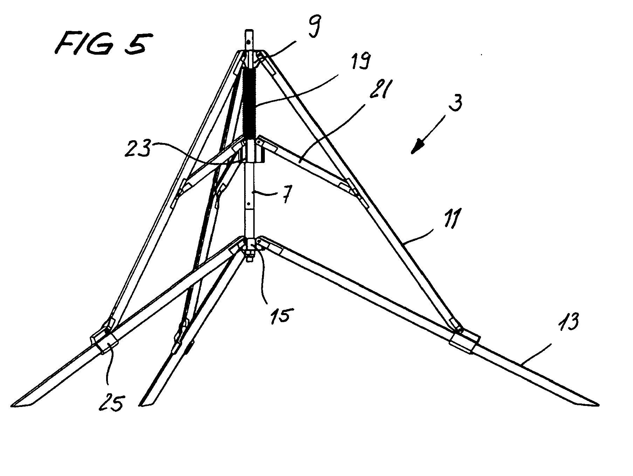

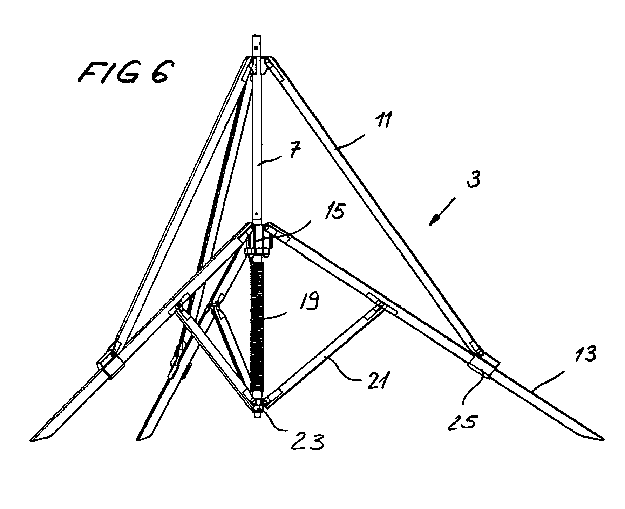

In der Ausgestaltung des Stativs 3 gemäss den Figuren 5 und 6 sind zwischen der Schiebestange 7 und den Armen 11 (Figur 5) bzw. zwischen der Schiebestange 7 und den Spreizstangen 13 zusätzliche Spannstangen 21 gelenkig eingesetzt und mit einer Spannhülse 23 verbunden. Bei diesen beiden Ausgestaltungen des Stativs 3 ist die Feder 19 zwischen der Schiebehülse 15 und der Spannhülse 23 (Figur 6) bzw. zwischen der Schiebehülse 15 und dem Gelenkteil 9 (Figur 5) eingesetzt.

In den Stativen 3 gemäss den Figuren 5 und 6 sind, im Gegensatz zum ersten Ausführungsbeispiel gemäss Figur 3, die unteren Enden der Arme 11 nicht direkt an den Spreizstangen 13 angelenkt, sondern an Gleithülsen 25, welche auf den Spreizstangen 13 verschiebbar sind. Die Schiebehülse 15 ist in dieser Ausführungsform an der Schiebestange 7 unverschiebbar befestigt.

In einer weiteren nicht dargestellten Ausgestaltung des Stativs 3 können die Endbereiche der Spreizstangen 13, welche unterhalb der Gleithülsen 25 liegen, nach oben abgeknickt oder gebogen sein, so dass sie bei geöffnetem Faltsignal 1 parallel zum Boden 20 zu liegen kommen oder auf diesem in einem sehr spitzen Winkel auftreffen und dadurch die Standfläche weiter vergrössern.

## Patentansprüche

1. Stativ (3) für ein Faltsignal (1), umfassend drei an einem Gelenkteil (9) oben angelenkte und spreizbare, in Gebrauchsstellung die dreieckigen Signalflächen des Faltsignals (1) gespannt haltende Arme (11), eine mit dem Gelenkteil (9) verbundene Schiebestange (7), auf der eine Schiebehülse (15) durch eine Feder (19) verschiebbar gelagert ist und an welcher drei Spreizstangen (13) angelenkt und mit den Armen (11) verbunden sind,
**dadurch gekennzeichnet, dass** die Spreizstangen (13) an den freien unteren Enden der Arme (11) angelenkt sind und diese in Gebrauchsstellung in einem stumpfen Winkel nach aussen überragen und dass deren Enden als Füsse des Faltsignals (1) fungieren.

2. Stativ nach Anspruch 1, **dadurch gekennzeichnet, dass** die Spreizstangen (13) an der auf der Schiebestange (7) verschiebbar befestigten Schiebehülse (15) angelenkt sind.

3. Stativ nach einem der Ansprüche 1 oder 2, **dadurch gekennzeichnet, dass** zwischen dem Gelenkteil (9) und der Schiebehülse (15) die Feder (19) eingespannt gehalten ist.

4. Stativ nach Anspruch 1, **dadurch gekennzeichnet, dass** die Spreizstangen (13) auf einer an der Schiebestange (7) unverschiebbar angebrachten Schiebehülse (15) angelenkt sind und dass die unteren Enden der Arme (11) an auf den Spreizstangen (13) verschiebbaren Gleithülsen (25) angelenkt sind.

5. Stativ nach Anspruch 4, **dadurch gekennzeichnet, dass** die Feder (19) zwischen dem Gelenkteil (9) und einer auf der Schiebestange (7) verschiebbaren Spannhülse (21) eingespannt ist und dass an der Spannhülse (23) drei zu den Armen (11) führende und mit diese gelenkig verbundene Spannstangen (21) eingesetzt sind.

6. Stativ nach Anspruch 1, **dadurch gekennzeichnet, dass** zwischen dem unteren Ende der Schiebestange (7) und den Spreizstangen (13) Spannstangen (21) eingesetzt sind, welche an der Spannhülse (23) und an den Spreizstangen (13) angelenkt sind.

7. Stativ nach Anspruch 6, **dadurch gekennzeichnet, dass** die Feder (19) zwischen der Spannhülse (23) am unteren Ende der Schiebestange (7) und der auf der Schiebestange (7) verschiebbaren Schiebehülse (5) eingespannt ist.
